# EUROPEAN PATENT SPECIFICATION

(11) **EP 2 591 240 B1**
(45) Date of publication and mention of the grant of the patent: **20.04.2016**
(21) Application number: 10730470.1
(22) Date of filing: 09.07.2010
(51) Int. Cl.: F16C 13/04, B23Q 1/76

(54) **ROLLER BED WITH ELECTRICAL CLUTCH**
ROLLGANG MIT ELEKTRISCHER KUPPLUNG
PLATE-FORME À GALETS AVEC EMBRAYAGE ÉLECTRIQUE

(43) Date of publication of application: 15.05.2013
(73) Proprietor: Esab AB, 402 77 Göteborg (SE)
(72) Inventor: VAN DORPE, Werner, Singapore 659245 (SG)
(74) Representative: Awapatent AB
(86) International application number: PCT/EP2010/059918
(87) International publication number: WO 2012/003883

(56) References cited:
- AT-U1- 7 772
- FR-A5- 2 041 363

## Description

### Field of the invention

The present invention relates to the field of managing and adjusting the position of large work pieces. In particular, the invention relates to a roller bed for rotating a generally circular work piece in circumferential direction. The roller bed comprises two supporting members, each supporting member comprises a top roller and a bottom roller, and the rollers are adapted for simultaneous mechanical drive in the same circumferential direction. The present invention also relates to a system of roller beds.

### Background of the invention

It is common to use roller beds when welding large work pieces, such as pipe sections, for manufacturing wind power plants, pipelines, or pressure vessels. A roller bed, such as that shown in GB-855,196 A, comprises two supporting members with two rollers each - one top roller and one bottom roller. The rollers can be either driven, through the use of an axle connected to a gear box, such that the rollers can rotate constantly in a desired circumferential direction, and hence rotating the work piece, or the rollers can be idle such that they rotate freely, hence rotating as a result of the work piece rotating. One could choose different combinations of driven and idle rollers. It is for example common to drive the bottom roller of each supporting member, whilst keeping the top member idle and freely rotatable. But using freely rotatable rollers on top will lead to an unstable rotation of the work piece, and therefore a four roller drive is necessary to guarantee a constant speed.

When loading the work piece onto such a four roller drive type of roller bed, the drive is turned off and rollers kept still, such that the work piece can be placed on the roller bed without any initial rotation of the work piece. The presence of a drive, which is turned off, will force all four rollers to be still and prevent them from any kind of rotation. When it comes to the top rollers, this is unfavourable since some rotation of the top rollers often is necessary when loading the work piece. This rotation is needed for allowing the work piece to sink downwards, with help of the rotating top rollers, in-between the two supporting members, forcing the supporting members to open up in a direction from each other, the work piece eventually abutting all four rollers.

This type of roller bed, with drive on all four rollers, must therefore be equipped with a clutch connected to each of the two top rollers, in order to facilitate the above described loading of the work piece onto the roller bed. The clutch is usually a mechanical device fitted at each top roller, and which is accessible from the outside of each roller bed. The clutch is operated manually when disengaging and engaging the top roller from the drive. Such a clutch works by loosening the top roller from the drive, i.e. the gear box, during loading, making the top roller able to rotate freely. Freely rotatable top rollers would solve the above mentioned problem and allow the supporting members to open up and receive the work piece as it sinks downwards within the roller bed and finally abuts all four rollers.

However, since each clutch needs to be manually disengaged, and later engaged, by the operator, the use of this type of mechanical clutch is labour intense and time consuming. Further, not all kinds of roller beds allow direct access to the drive from the outside, which makes it impossible to use this kind of clutch.

FR 2041363 discloses another known roller bed for rotating a work piece in circumferential direction, and comprising top and bottom rollers adapted for simultaneous mechanical drive, having similar drawbacks as the ones recited above.

### Summary of the invention

It is an object of the present invention to mitigate the above problems, and to provide a roller bed with an electrical clutch which prevents time consuming manual labour and which is possible to use with all kinds of roller beds. According to an aspect of the present invention, these objects are achieved by a roller bed for rotating a generally circular work piece in circumferential direction, in accordance with claim 1.

The use of an electrical clutch eliminates a large part, if not all of, the manual labour associated with disengaging and/or engaging the clutch. This procedure can also be performed much faster than compared to a conventional, mechanical clutch which requires the operator to perform manual labour on each clutch, both when disengaging and when engaging the clutch. Further, an electrical clutch can be used on roller beds which cannot be equipped with a mechanical clutch

The electrical clutch is adapted for also rotating each top roller in a circumferential direction which is directed towards the opposing top roller. This type of driven rotation will keep the work piece more stable on the roller bed during loading.

The electrical clutch can also be controlled remotely, which allows further reduction of the time and labour used, since the operator can be located at another location than the roller bed, or the control might even be performed automatically by a computer.

The invention may also comprise a roller bed system, comprising at least two roller beds according to any of the previous claims and at least one gear box, whereby the gear box is connected to the plurality of roller beds. It is undoubtedly common to use at least two roller beds at the same time. The larger the number of roller beds, the larger the savings in time and labour, since each roller bed comprises two top rollers which otherwise need to be disengaged and engaged manually.

### Brief description of the drawings

This and other aspects of the present invention will now be described in more detail, with reference to the appended drawings showing a currently preferred embodiment of the invention.

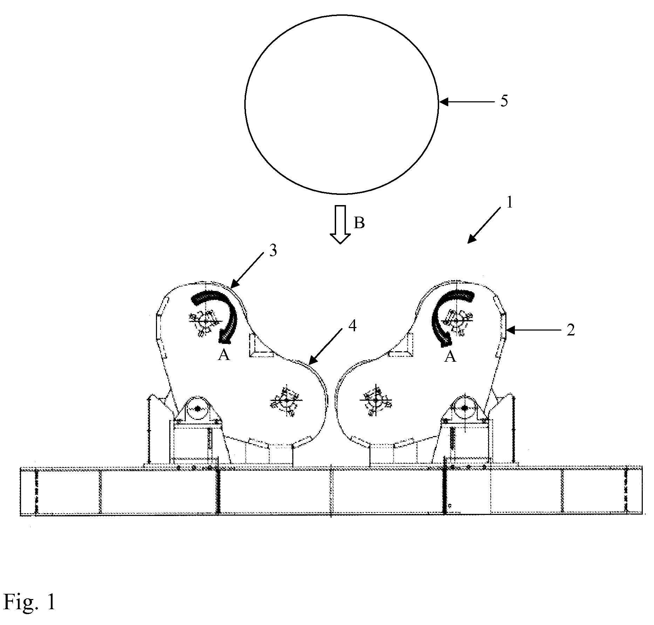

Figure 1 shows a side view of the roller bed according to an embodiment of the present invention.

### Detailed description

Figure 1 shows a roller bed 1 comprising two somewhat circularly shaped supporting members 2. Each supporting member 2 is equipped with two rollers, one top roller 3 and one bottom roller 4. All rollers 3, 4 are connected to a mechanical drive (not shown), i.e. a gear box, which drives the rollers in one of two circumferential directions, i.e. clockwise or anticlockwise as seen in the direction of a centre axis of a work piece 5 loaded onto the roller bed 1. During operation, such as during welding, all rollers 3, 4 are rotated in the same direction, hence rotating the work piece 5.

Each top roller 3 is provided with an electrical clutch. This clutch is engaged by remote control, for example when choosing "loading position" on a control panel. When the clutch is engaged, the top roller 3 is disengaged from the mechanical drive and starts to rotate in a circumferential direction A which is directed towards the opposing top roller 3 within the same roller bed 1. Both top roller clutches are engaged simultaneously such that both top rollers 3 rotate at the same time, but in opposite directions (i.e. towards each other).

When placing the work piece 5 on top of the rotating top rollers 3, the supporting members 2 are opened in a direction away from each other, and the work piece 5 slides in a downwards direction B such that it abuts all four rollers 3, 4 of the roller bed 1. When this is completed, the electrical clutch can be disengaged and normal drive can be actuated.

The roller beds 1 are usually used at least in pairs, forming a roller bed system. This roller bed system comprises at least two roller beds 1 and a gear box. The gear box provides drive to all rollers 3, 4 of the roller bed system, through one of more axes, in accordance with the description above.

The person skilled in the art realizes that the present invention by no means is limited to the preferred embodiments described above. On the contrary, many modifications and variations are possible within the scope of the appended claims. For example, the two supporting members could be replaced with one larger, Y-shaped member. Also, the electrical clutch could be connected to only a part of the top rollers, or even to a part of or all bottom rollers. Further, all or some of the rollers could be rotated in a direction from each other, or be idle. As regards the control of the electrical clutch, this could be executed manually by an operator through a control panel or a remote control, or automatically by a computer. Further, a system of roller beds could comprise of any number of roller beds, gear boxes, electrical clutches, and/or axes, depending on the specific needs at that moment.

## Claims

1. A roller bed (1) for rotating a generally circular work piece (5) in circumferential direction, the roller bed (1) comprising two supporting members (2), each supporting member (2) comprising a top roller (3) and a bottom roller (4), said rollers (3, 4) being adapted for simultaneous mechanical drive in the same circumferential direction, **characterised by** said supporting members (2) being arranged such that said supporting members (2) are openable in a direction away from each other during a work piece loading operation, each top roller being connected to an electrical clutch, said electrical clutch being adapted such that during said work piece loading operation, said top roller (3) is disengageable from said simultaneous mechanical drive and further adapted to rotate each top roller (3) in a circumferential direction (A) which is directed towards an opposing top roller (3) within the same roller bed (1), wherein both top roller clutches are engageable simultaneously such that both top rollers (3) are rotatable at the same time, but in opposite directions.

2. A roller bed (1) according to claim 1, wherein said electrical clutch is controlled remotely.

3. A roller bed system comprising at least two roller beds (1) according to any of the previous claims and at least one gear box, whereby said gear box is connected to said plurality of roller beds (1).

## Patentansprüche

1. Rollenbett (1) zum Drehen eines im Allgemeinen runden Werkstücks (5) in der Umfangsrichtung, wobei das Rollenbett (1) zwei Tragelemente (2) umfasst, wobei jedes Tragelement (2) eine obere Rolle (3) und eine untere Rolle (4) umfasst, wobei die Rollen (3, 4) für gleichzeitigen mechanischen Antrieb in dieselbe Umfangsrichtung ausgebildet sind, **dadurch gekennzeichnet, dass** die Tragelemente (2) derart angeordnet sind, dass die Tragelemente (2) während eines Werkstückaufgabevorgangs in eine Richtung voneinander weg geöffnet werden können, wobei jede obere Rolle mit einer elektrischen Kupplung verbunden ist, wobei die elektrische Kupplung derart ausgebildet ist, dass während des Werkstückaufgabevorgangs die obere Rolle (3) außer Eingriff von dem gleichzeitigen mechanischen Antrieb gebracht werden kann, und ferner dazu ausgebildet ist, jede obere Rolle (3) in einer Umfangsrichtung (A) zu drehen, die in Richtung einer gegenüberliegenden oberen Rolle (3) innerhalb desselben Rollenbetts (1) gerichtet ist, wobei beide Kupplungen für die oberen Rollen derart gleichzeitig in Eingriff gebracht werden können, dass beide oberen Rollen (3) gleichzeitig, jedoch in entgegengesetzte Richtungen gedreht werden können.

2. Rollenbett (1) nach Anspruch 1, wobei die elektrische Kupplung ferngesteuert wird.

3. Rollenbettsystem, welches mindestens zwei Rollenbetten (1) nach einem beliebigen der vorangehenden Ansprüche und mindestens ein Getriebe umfasst, wobei das Getriebe mit den mehreren Rollenbetten (1) verbunden ist.

## Revendications

1. Plateforme à galets (1) pour faire tourner une pièce généralement circulaire (5) dans la direction circonférentielle, la plateforme à galets (1) comprenant deux éléments de support (2) chaque élément de support (2) comprenant un galet supérieur (3) et un galet inférieur (4), lesdits galets (3, 4) étant à même d'assurer un entraînement mécanique simultané dans la même direction circonférentielle, **caractérisée en ce que** lesdits éléments de support (2) sont aménagés de sorte que lesdits éléments de support (2) puissent être ouverts dans une direction les écartant l'un de l'autre au cours d'une opération de chargement d'une pièce, chaque galet supérieur étant raccordé à un embrayage électrique, ledit embrayage électrique étant tel qu'au cours de ladite opération de chargement d'une pièce, ledit rouleau supérieur (3) puisse se dégager dudit entraînement mécanique simultané et soit en outre à même de faire tourner chaque rouleau supérieur (3) dans une direction circonférentielle (A) qui est dirigée vers un galet supérieur opposé (3) dans la même plateforme de galets (1), dans laquelle les embrayages de galets supérieurs sont tous deux à même de s'engager simultanément de sorte que les deux galets supérieurs (3) puissent tourner en même temps, mais dans des sens opposés.

2. Plateforme de galets (1) selon la revendication 1, dans laquelle ledit embrayage électrique est commandé à distance.

3. Système de plateformes de galets comprenant au moins deux plateformes de galets (1) selon l'une quelconque des revendications précédentes et au moins une boîte de vitesses, dans lequel ladite boîte de vitesses est raccordée à ladite pluralité de plateformes de galets (1).
